# EUROPÄISCHE PATENTSCHRIFT

(11) **EP 3 493 892 B1**
(45) Veröffentlichungstag und Bekanntmachung des Hinweises auf die Patenterteilung: **08.07.2020**
(21) Anmeldenummer: 17742767.1
(22) Anmeldetag: 27.07.2017
(51) Int. Cl.: B01D 53/14, C10K 1/00

(54) **ZWEISTUFIGES VERFAHREN ZUM ENTFERNEN VON CO2 AUS SYNTHESEGAS**
TWO-STAGE METHOD FOR REMOVING CO2 FROM SYNTHESIS GAS
PROCÉDÉ EN DEUX ÉTAPES PERMETTANT D'EXTRAIRE DU CO2 PRÉSENT DANS DU GAZ DE SYNTHÈSE

(30) Priorität: 01.08.2016 EP 16182234
(43) Veröffentlichungstag der Anmeldung: 12.06.2019
(73) Patentinhaber: BASF SE, 67056 Ludwigshafen am Rhein (DE)
(72) Erfinder: KATZ, Torsten, 67056 Ludwigshafen (DE); NOTZ, Ralf, 67056 Ludwigshafen (DE); KUNKELMANN, Christian, 67056 Ludwigshafen (DE)
(86) Internationale Anmeldenummer: PCT/EP2017/068996
(87) Internationale Veröffentlichungsnummer: WO 2018/024598

(56) Entgegenhaltungen:
- EP-A2- 0 173 908
- EP-A2- 0 190 434
- DE-A1- 3 735 717

## Beschreibung

Die vorliegende Erfindung betrifft ein Verfahren und eine Vorrichtung zum Entfernen von CO₂ aus einem Fluidstrom, insbesondere aus Synthesegas.

Die Ammoniak-Synthese nach dem Haber-Bosch-Verfahren ist das bedeutendste großtechnische Verfahren zur Herstellung von Ammoniak. Der hierfür benötigte Wasserstoff stammt meist aus Synthesegas, einem Gasgemisch, das hauptsächlich Kohlenstoffmonoxid und Wasserstoff enthält. Das Kohlenmonoxid wird in einer Wassergas-Shift-Reaktion zu CO₂ umgesetzt, und das Kohlendioxid kann anschließend durch Gaswäsche entfernt werden.

Im industriellen Maßstab werden zur Entfernung von Sauergasen wie Kohlendioxid aus Fluidströmen häufig wässrige Lösungen organischer Basen, z. B. Amine wie insbesondere Alkanolamine, als Absorptionsmittel eingesetzt. Beim Lösen von Sauergasen bilden sich dabei aus der Base und den Sauergasbestandteilen ionische Produkte. Das Absorptionsmittel kann durch Erwärmen, Entspannen auf einen niedrigeren Druck oder Strippen regeneriert werden, wobei die ionischen Produkte zu Sauergasen zurück reagieren und/oder die Sauergase mittels Dampf abgestrippt werden. Nach dem Regenerationsprozess kann das Absorptionsmittel wiederverwendet werden.

Im Stand der Technik ist vorgeschlagen worden, diese Gaswäschen als zweistufige Absorptions- und zweistufige Desorptionsprozesse zu gestalten. Eine derartige Durchführung ist unter energetischen Aspekten sinnvoll, da nur ein Teil des Volumens des beladenen Absorptionsmittels vollständig regeneriert und der verbleibende Teil des beladenen Absorptionsmittels lediglich teilregeneriert werden muss. Mit dem teilregenerierten Absorptionsmittel wird im ersten Absorptionsschritt die Hauptmenge an CO₂ entfernt, und im zweiten Absorptionsschritt erfolgt eine Feinreinigung mit dem regenerierten Absorptionsmittel.

Die EP 0 190 434 A2 beschreibt ein Verfahren zur Entfernung von CO₂ aus Gasen. Dabei leitet man den CO₂-haltigen Gasstrom nacheinander in zwei Absorber ein und kontaktiert diesen im Gegenstrom zuerst mit einem teilregenerierten und anschließend mit einem regenerierten wässrigen, ein Alkanolamin enthaltenden Absorptionsmittel, um so CO₂ durch Reaktion mit dem Absorptionsmittel aus dem Gasstrom zu entfernen. Zur Regenerierung des beladenen Absorptionsmittels entspannt man dieses in einem ersten Entspannungsbehälter auf einen Druck über dem Atmosphärendruck und anschließend in einem weiteren Entspannungsbehälter auf einen Unterdruck von 0,3 bis 1 bar. Ein Teilstrom des erhaltenen teilregenerierten Absorptionsmittels wird anschließend in die erste Absorptionsstufe zurückgeführt und ein weiterer Teilstrom in einem Stripper vollständig regeneriert. Durch die Installation des Unterdruck-Entspannungsbehälters kann die Sauergasaufnahmekapazität des teilregenerierten Absorptionsmittels erhöht werden, was eine Reduzierung der Absorptionsmittelströme und eine Verringerung der Absorber- bzw. Stripperdurchmesser ermöglicht und die Wirtschaftlichkeit der Anlage verbessert. Dabei erzeugt man den Unterdruck im Entspannungsbehälter durch eine Wasserdampfstrahlpumpe, die durch externen Treibdampf betrieben wird, in Kombination mit einem mechanischen Vakuumerzeugungsapparat, z. B. einem Verdichter. Die vereinigten Brüden werden in den ersten Entspannungsbehälter geleitet. Durch den externen Treibdampf werden gleichzeitig Wasserverluste über den behandelten Fluidstrom und die freigesetzten Sauergase oder aufgrund anderer physikalischer Verluste ausgeglichen und die Wasserbilanz der Anlage gewahrt. Der Zusatz von externem Wasser zum Ausgleich von Verlustmengen (Make up-Wasser) erfolgt damit zwangsweise in Form von Treibdampf in den ersten Entspannungsbehälter und der Zusatz von weiterem Make up-Wasser in andere Anlagenteile muss unterbleiben oder zumindest stark reduziert werden, um die Wasserbilanz zu wahren. Da der behandelte Gasstrom beim Verlassen des Absorbers Amine mitführt und es zu Aminverlusten kommt, ist es allerdings wünschenswert, das Make up-Wasser flüssig in den Absorber einzuleiten. Durch Zuführung des Make up-Wassers in den Absorber - idealerweise über eine Rückwaschzone - werden die im Gasstrom enthaltenen Amine zumindest teilweise zurückgehalten und Aminverluste können vermindert werden. Ein weiterer Nachteil bei der bekannten Anlage ist der notwendige Einsatz eines kostenintensiven Verdichters zur Bereitstellung des Unterdrucks im zweiten Entspannungsbehälter. Ein bei Unterdruck betriebener Entspannungsbehälter ist in Kombination mit einer entzündlichen Gasatmosphäre, wie einer Wasserstoffatmosphäre, außerdem im Hinblick auf sicherheitstechnische Aspekte kritisch. Bei unbemerkten Leckagen kann Luft oder Sauerstoff in die Anlage eindringen und mit Wasserstoff eine explosionsfähige Atmosphäre bilden.

In der EP 0 173 908 A2 wird ein ähnliches Verfahren beschrieben, bei dem der Entspannungsbehälter nicht notwendigerweise bei Unterdruck, sondern z. B. bei einem Druck von bevorzugt 1 bis 1,5 bar betrieben wird. Dadurch kann im Vergleich zum oben beschriebenen Verfahren der Kompressor entweder komplett vermieden oder durch ein kostengünstigeres Gebläse ersetzt werden, was die Wirtschaftlichkeit der Anlage weiter erhöht. Aus dem Brüden aus dem zweiten Entspannungsbehälter werden Absorptionsmittelbestadteile und Wasser in einem Kondensator auskondensiert. Jedoch geht bei dieser Vorgehensweise die latente Wärme, die bei der Kondensation des wasserdampfhaltigen Gasstroms im Kondensator frei wird, für den Prozess verloren.

Der vorliegenden Erfindung liegt die Aufgabe zugrunde, ein Verfahren zur Entfernung von CO₂ aus Fluidströmen, insbesondere zur Entfernung von CO₂ aus Synthesegas, anzugeben, bei dem die latente Wärme der wasserdampfhaltigen Gasströme im Prozess erhalten bleibt und das den Einsatz eines kostenintensiven Kompressors entbehrlich macht und dessen Wirtschaftlichkeit im Vergleich zu den Verfahren aus dem Stand der Technik dadurch erhöht ist.

Die Aufgabe wird gelöst durch ein Verfahren zum Entfernen von CO₂ aus einem Fluidstrom mit einem wässrigen Absorptionsmittel, bei dem man
a) den Fluidstrom in eine erste Absorptionszone einleitet und mit teilregeneriertem Absorptionsmittel behandelt,
b) den behandelten Fluidstrom in einer zweiten Absorptionszone mit regeneriertem Absorptionsmittel behandelt, wobei man einen von CO₂ gereinigten Fluidstrom sowie ein beladenes Absorptionsmittel erhält,
c) das beladene Absorptionsmittel in einem ersten Entspannungsbehälter auf einen Druck von 1,2 bis 3 bar (absolut) entspannt, wobei man ein sub-teilregeneriertes Absorptionsmittel und einen ersten CO₂-haltigen Gasstrom erhält,
d) das sub-teilregenerierte Absorptionsmittel in einem zweiten Entspannungsbehälter auf einen Druck von 1 bis 1,2 bar (absolut) entspannt, wobei man ein teilregeneriertes Absorptionsmittel und einen wasserdampfhaltigen, zweiten CO₂-haltigen Gasstrom erhält,
e) einen Teilstrom des teilregenerierten Absorptionsmittels in die erste Absorptionszone leitet und einen weiteren Teilstrom des teilregenerierten Absorptionsmittels in einen Stripper leitet, in dem man das teilregenerierte Absorptionsmittel thermisch regeneriert, wobei man regeneriertes Absorptionsmittel und einen dritten CO₂-haltigen Gasstrom erhält und wobei der Stripper bei einem Druck betrieben wird, der mindestens 0,9 bar höher ist als der Druck im ersten Entspannungsbehälter,
f) das regenerierte Absorptionsmittel in die zweite Absorptionszone rückführt,
g) den wasserdampfhaltigen, zweiten CO₂-haltigen Gasstrom mit einer Strahlpumpe komprimiert und in direkten Wärmetauschkontakt mit dem beladenen Absorptionsmittel im ersten Entspannungsbehälter bringt, wobei die Strahlpumpe mittels des dritten CO₂-haltigen Gasstroms betrieben wird.

Die entsprechende Vorrichtung wird im Anspruch 11 definiert.

Alle im vorliegenden Dokument angegebenen Drücke sind Absolutdrücke.

Im ersten Schritt des Verfahrens leitet man einen Fluidstrom zur Behandlung mit einem teilregenerierten Absorptionsmittel in eine erste Absorptionszone ein und anschließend zur Behandlung mit einem regenerierten Absorptionsmittel in eine zweite Absorptionszone ein.

Erfindungsgemäß wird der CO₂-haltige Fluidstrom in einer ersten Absorptionszone mit einem teilregenerierten Absorptionsmittel in Kontakt gebracht. Dabei erhält man einen zumindest teilweise von CO₂ gereinigten Fluidstrom. Anschließend wird der Fluidstrom in einer zweiten Absorptionszone mit regeneriertem Absorptionsmittel behandelt, wobei man einen von CO₂ gereinigten Fluidstrom (im Folgenden auch als behandelter Fluidstrom bezeichnet) sowie ein mit CO₂ beladenes Absorptionsmittel erhält. Das in der zweiten Absorptionszone erhaltene teilbeladene Absorptionsmittel, dessen Absorptionskapazität in der Regel nicht erschöpft ist, wird vorzugsweise in die erste Absorptionszone geleitet.

Die Behandlung des Fluidstroms mit dem Absorptionsmittel erfolgt vorzugsweise im Gegenstrom. Der Fluidstrom wird dabei im Allgemeinen in einen unteren Bereich und das Absorptionsmittel in einen oberen Bereich der jeweiligen Absorptionszone eingespeist. Zur Verbesserung des Kontakts und Schaffung einer großen Stoffaustauschgrenzfläche enthält die Absorptionszone in der Regel Einbauten, z. B. Füllkörper, Packungen und/oder Böden. Die Behandlung des Fluidstroms mit dem Absorptionsmittel erfolgt geeigneter Weise in einem Absorptionsturm bzw. einer Absorptionskolonne, z. B. einer Füllkörper-, Packungs- oder Bodenkolonne. Als Absorptionszone wird die Sektion einer Absorptionskolonne angesehen, in der der Fluidstrom in Stoffaustausch-Kontakt mit dem Absorptionsmittel kommt.

Dabei können die beiden Absorptionszonen übereinander in einer Kolonne angeordnet sein. In diesem Fall wird der Fluidstrom in den Sumpf der Kolonne eingespeist, das teilregenerierte Absorptionsmittel im oberen Bereich der ersten Absorptionszone eingespeist und das regenerierte Absorptionsmittel im oberen Bereich der zweiten Absorptionszone, d.h. am Kopf der Kolonne. Das aus der zweiten Absorptionszone ablaufende teilbeladene Absorptionsmittel durchläuft dann die erste Absorptionszone.

Eine weitere Ausführungsform ist die Anordnung der beiden Absorptionszonen in zwei getrennten, in Reihe geschalteten Kolonnen.

Der Fluidstrom wird mit einem Druck von 10 bis 80 bar, bevorzugt 20 bis 40 bar, in die erste Absorptionszone eingeführt. Der Druck in der ersten und der zweiten Absorptionszone ist, abgesehen von unvermeidlichen Druckverlusten, vorzugsweise im Wesentlichen gleich. Die Temperatur des in die erste Absorptionszone eingeführten teilregenerierten Absorptionsmittels beträgt im Allgemeinen 50 bis 120 °C, bevorzugt 70 bis 90 °C. Die Temperatur des in die zweite Absorptionszone eingeführten regenerierten Absorptionsmittels beträgt im Allgemeinen 20 bis 70 °C, bevorzugt 30 bis 55 °C.

In einer Ausführungsform der Erfindung wird der von CO₂ gereinigte Fluidstrom in einer Rückwaschzone mit einer wässrigen Waschflüssigkeit in Kontakt gebracht, um mitgeführte Absorptionsmittelbestandteile und dessen Zersetzungsprodukte zumindest teilweise in die Waschflüssigkeit zu überführen. Dabei erhält man einen von Absorptionsmittelbestandteilen, dessen Zersetzungsprodukten und CO₂ gereinigten Fluidstrom und eine mit Absorptionsmittelbestandteilen und dessen Zersetzungsprodukten beladene Waschflüssigkeit. Vorzugsweise weist die Waschzone Füllkörper, Packungen und/oder Böden auf, um den Kontakt des Fluidstroms mit der Waschflüssigkeit zu intensivieren. Die Waschflüssigkeit kann oberhalb der Waschzone durch geeignete Flüssigkeitsverteiler über den Querschnitt der Waschzone verteilt werden.

In bevorzugten Ausführungsformen ist die Waschzone als oberhalb der zweiten Absorptionszone angeordnete Sektion einer Absorptionskolonne ausgebildet, d.h. ein Abschnitt der Absorptionskolonne oberhalb der Einspeisung des regenerierten Absorptionsmittels.

Als wässrige Waschflüssigkeit eignen sich wässrige Flüssigkeiten, die weitgehend frei von Aminen und Amin-Zersetzungsprodukten sind. Es kann sich bei der Waschflüssigkeit um intrinsische Flüssigkeiten, d.h. wässrige Flüssigkeiten, die an anderer Stelle des Verfahrens anfallen, oder um von außen zugeführte wässrige Flüssigkeiten (Make up-Wasser) handeln.

In bevorzugten Ausführungsformen wird die Waschflüssigkeit ganz oder teilweise von Frischwasser aus einer externen Quelle (Make up-Wasser) gebildet, das in die Waschzone geleitet wird, um Wasserverluste auszugleichen. Dies ist nötig, da die Anlage in Form von Wasserdampf, der über den behandelten Fluidstrom und die freigesetzten Sauergase abgeführt wird, oder aufgrund anderer physikalischer Verluste laufend Wasser verliert. In einer bevorzugten Ausführungsform führt man die wässrige Waschflüssigkeit im einfachen Durchgang ohne Umpumpen durch die Waschzone. Die aus der Waschzone ablaufende Waschflüssigkeit wird vorzugsweise in die zweite Absorptionszone geleitet.

Erfindungsgemäß erfolgt die Regenerierung des beladenen Absorptionsmittels durch eine Kombination aus Entspannung in Entspannungsbehältern und Desorption in einem Stripper.

In einer Ausführungsform der Erfindung wird das beladene Absorptionsmittel in einen dem ersten Entspannungsbehälter vorgeschalteten Entspannungsbehälter (Hochdruck-Flash) entspannt, wobei der vorgeschaltete Entspannungsbehälter bei einem gegenüber dem ersten Entspannungsbehälter höheren Druck betrieben wird. Im Allgemeinen beträgt der Druck im vorgeschalteten Entspannungsbehälter 6 bis 10 bar, bevorzugt 7 bis 9 bar. Bei diesem Schritt erhält man einen Co-Absorbat-haltigen Gasstrom. Unter dem Begriff Co-Absorbat sollen von Sauergasen verschiedene Bestandteile des Fluidstroms verstanden werden, die sich im Absorptionsschritt im Absorptionsmittel physikalisch lösen. Hierzu zählen Verbindungen wie Stickstoff, Wasserstoff, Kohlenmonoxid, Argon und/oder Kohlenwasserstoffe, wie Methan. Bei der Entspannung im Hochdruck-Flash kann auch ein Teil des CO₂ freigesetzt werden. Im Hochdruck-Flash wird der Druck vorzugsweise so eingestellt, dass nicht die Hauptmenge des CO₂ freigesetzt wird. Bei diesem Schritt erhält man ein von Co-Absorbat weitgehend befreites, beladenes Absorptionsmittel, das dann in den ersten Entspannungsbehälter geleitet wird.

Optional kann man die beim Entspannen des beladenen Absorptionsmittels in den vorgeschalteten Entspannungsbehälter freiwerdende kinetische Energie mit einer Entspannungsturbine zurückgewinnen und diese z. B. zum Antrieb einer Pumpe verwenden, wodurch elektrische Energie eingespart wird. Die mechanische Energie kann direkt zum Antrieb einer angekuppelten Pumpe verwendet werden, indem z. B. die Entspannungsturbine und das Pumpenlaufrad auf einer gemeinsamen Welle sitzen. Alternativ kann man die kinetische Energie in elektrische Energie umwandeln und für den Betrieb der Pumpe verwenden.

Erfindungsgemäß entspannt man das beladene oder, falls der optional vorgeschaltete Entspannungsbehälter eingesetzt wird, das von Co-Absorbat weitgehend befreite, beladene Absorptionsmittel in den ersten Entspannungsbehälter auf einen Druck von 1,2 bis 3 bar, bevorzugt 1,3 bis 1,8 bar. Dadurch erhält man einen ersten CO₂-haltigen Gasstrom sowie ein sub-teilregeneriertes Absorptionsmittel. Als sub-teilregeneriertes Absorptionsmittel wird vorliegend ein Absorptionsmittel bezeichnet, dessen CO₂-Beladung zwischen der des beladenen Absorptionsmittels und der des teilregenerierten Absorptionsmittels liegt.

In einer Ausführungsform der Erfindung kondensiert man aus dem ersten CO₂-haltigen Gasstrom Absorptionsmittelbestandteile aus, die ausgetragen wurden. Zu diesem Zweck wird der erste CO₂-haltige Gasstrom mit einem Wärmetauscher gekühlt und der erhaltene Gas-/Flüssigkeitsstrom mittels eines Abscheiders in die Phasen getrennt. Der erhaltene CO₂-haltige Gasstrom kann dann aus der Anlage abgeführt werden. Das im Abscheider abgetrennte Kondensat, das wässrige Absorptionsmittelbestandteile enthält, wird in den ersten Entspannungsbehälter zurückgeführt.

Vorzugsweise führt man das erhaltene Kondensat über eine Rückwaschzone in den Entspannungsbehälter zurück. In der Regel weist diese Rückwaschzone Einbauten, wie z. B. Füllkörper, Packungen und/oder Böden, auf, um im Gasstrom mitgeführte Absorptionsmittelbestandteile zumindest teilweise zurückzuhalten. Durch diese Rückführung kann man den Austrag bzw. Verlust von Absorptionsmittelbestandteilen vermeiden.

Das sub-teilregeneriertes Absorptionsmittel wird dann in einem zweiten Entspannungsbehälter auf einen Druck entspannt, der bei oder geringfügig über Atmosphärendruck liegt, d. h. 1 bis 1,2 bar. Bei diesem Schritt erhält man einen wasserdampfhaltigen, zweiten CO₂-haltigen Gasstrom sowie ein teilregeneriertes Absorptionsmittel.

Durch die Entspannungsschritte wird ein Teil des absorbierten CO₂ wieder freigesetzt. Das teilregenerierte Absorptionsmittel besitzt CO₂-Aufnahmekapazität; ein Teilstrom des teilregenerierten Absorptionsmittels wird in die erste Absorptionszone geleitet. Ein anderer Teilstrom des teilregenerierten Absorptionsmittels wird für einen thermischen Regenerierungsschritt in einen Stripper geleitet. Dies ist energetisch vorteilhaft, da nicht das gesamte Volumen des teilregenerierten Absorptionsmittels thermisch regeneriert werden muss.

Im Stripper erfolgt ein thermischer Regenerierungs-Schritt, um das im teilregenerierten Absorptionsmittel noch enthaltene CO₂ freizusetzen. Für die Strippung wird Strippgas benötigt, das durch teilweise Verdampfung des Absorptionsmittels im Sumpf des Strippers erzeugt wird. Dadurch kommt es zu einer thermischen Gleichgewichts-Verschiebung der reversiblen Absorption von CO₂ an das Absorptionsmittel, und das noch enthaltene CO₂ wird freigesetzt. Das desorbierte CO₂ kann am Kopf des Strippers als dritter CO₂-haltiger Gasstrom abgezogen werden. Außerdem erhält man ein regeneriertes Absorptionsmittel, das in die zweite Absorptionszone zurückgeführt wird.

Im Allgemeinen wird das regenerierte Absorptionsmittel vor der Rückführung in die zweite Absorptionszone auf eine geeignete Absorptionstemperatur abgekühlt. Um die in dem heißen regenerierten Absorptionsmittel enthaltene Energie auszunutzen, ist es bevorzugt, das teilregenerierte Absorptionsmittel aus dem zweiten Entspannungsbehälter durch indirekten Wärmetausch mit dem heißen regenerierten Absorptionsmittel vorzuwärmen. Durch den Wärmetausch wird das teilregenerierte Absorptionsmittel auf eine höhere Temperatur gebracht, so dass im Regenerationsschritt ein geringerer Energieeinsatz erforderlich ist. Durch den Wärmetausch kann auch bereits eine teilweise Regenerierung des teilregenerierten Absorptionsmittels unter Freisetzung von CO₂ erfolgen.

Der Druck des Teilstroms des teilregenerierten Absorptionsmittels, der zum Stripper geleitet wird, muss vor Eintritt in den Stripper mit einer Pumpe oder durch Hydrostatik so weit erhöht werden, dass im Vergleich zum ersten Entspannungsbehälter ein Druckunterschied von mindestens 0,9 bar herrscht. Bei der Erfindung wird der Stripper bei einem höheren Druck betrieben als der erste Entspannungsbehälter, da der nach der Regenerierung im Stripper entstehende dritte CO₂-haltige Gasstrom im vorliegenden Verfahren in den ersten Entspannungsbehälter zurückgeführt wird und dabei eine Strahlpumpe betreibt, mit der der wasserdampfhaltige, zweite CO₂-haltige Gasstrom komprimiert und in den ersten Entspannungsbehälter geleitet wird. Erfindungsgemäß ist es also mittels der durch den dritten CO₂-haltigen Gasstrom betriebenen Strahlpumpe möglich, den wasserdampfhaltigen, zweiten CO₂-haltigen Gasstrom von einem niedrigen Druckniveau auf das Druckniveau des ersten Entspannungsbehälters anzuheben und so beide Gasströme in den ersten Entspannungsbehälter zurückzuführen und in direkten Wärmetauschkontakt mit dem beladenen Absorptionsmittel im ersten Entspannungsbehälter zu bringen. Dadurch kann die latente Wärme des wasserdampfhaltigen, zweiten Gasstroms ausgenutzt werden.

Im ersten Entspannungsbehälter werden das beladene Absorptionsmittel und der mittels des dritten CO₂-haltigen Gasstroms komprimierte zweite CO₂-haltige Gasstrom vorzugsweise im Gegenstrom zueinander geführt. Der erste Entspannungsbehälter ist dazu vorzugsweise als Kolonne ausgebildet. Durch Einbauten, wie insbesondere eine Packung, kann der Stoff- und Wärmeaustausch zwischen dem beladenen Absorptionsmittel und den CO₂-haltigen Gasströmen verbessert werden.

In vielen Fällen ist es günstig, den Druck des wasserdampfhaltigen, zweiten CO₂-haltigen Gasstroms vor dem Eintritt in die Strahlpumpe zu erhöhen. Hierzu ist ein Gebläse geeignet. Ein Gebläse ist eine fremd angetriebene Fluidenergiemaschine, die ein gasförmiges Medium fördert und verdichtet, wobei zwischen Ansaug- und Druckseite ein Druckverhältnis von mehr als 1 bis vorzugsweise weniger als 1,5 herrscht. Gebläse weisen meist ein in einem Gehäuse rotierendes Laufrad auf. Es ist erfindungsgemäß vorteilhaft, dass zur Druckerhöhung kein Kompressor oder Verdichter erforderlich ist. Bei einem Verdichter herrscht zwischen Ansaug- und Druckseite ein Druckverhältnis von mehr als 3. Verdichter sind z. B. als Kolbenverdichter oder Rotationsverdichter ausgebildet. Ein Kompressor ist sowohl in der Anschaffung als auch im laufenden Betrieb kostenintensiv.

Bevorzugt wird der Druck des wasserdampfhaltigen, zweiten CO₂-haltigen Gasstroms mit einem Gebläse um 0,05 bis 0,5 bar, bevorzugt um 0,1 bis 0,25 bar, erhöht. In Kombination mit der oben erwähnten Strahlpumpe kann der Druck dadurch auf das das Druckniveau des ersten Entspannungsbehälters angehoben werden.

Die Zusammensetzung des Absorptionsmittels ist nicht kritisch, es können beliebige Absorptionsmittel verwendet werden, die neben Wasser auch physikalische Lösungsmittel enthalten können. Vorzugsweise ist das Absorptionsmittel eine wässrige Lösung wenigstens eines Amins. Vorzugsweise umfasst das Amin wenigstens ein primäres oder sekundäres Amin.

Bevorzugte Amine sind die Folgenden:
(i) Amine der Formel I:

   NR¹(R²)₂ (I)

   worin R¹ unter C₂-C₆-Hydroxyalkylgruppen, C₁-C₆-Alkoxy-C₂-C₆-alkylgruppen, Hydroxy-C₁-C₆-Alkoxy-C₂-C₆-alkylgruppen und 1-Piperazinyl-C₂-C₆-alkylgruppen ausgewählt ist und R² unabhängig unter H, C₁-C₆-Alkylgruppen und C₂-C₆-Hydroxyalkylgruppen ausgewählt ist;
(ii) Amine der Formel II:

   R³R⁴N-X-NR⁵R⁶ (II)

   worin R³, R⁴, R⁵ und R⁶ unabhängig voneinander unter H, C₁-C₆-Alkylgruppen, C₂-C₆-Hydroxyalkylgruppen, C₁-C₆-Alkoxy-C₂-C₆-alkylgruppen und C₂-C₆-Aminoalkylgruppen ausgewählt sind und X für eine C₂-C₆-Alkylengruppe, -X¹-NR⁷-X²- oder -X¹-O-X²- steht, worin X¹ und X² unabhängig voneinander für C₂-C₆-Alkylengruppen stehen und R⁷ für H, eine C₁-C₆-Alkylgruppe, C₂-C₆-Hydroxyalkylgruppe oder C₂-C₆-Aminoalkylgruppe steht;
(iii) 5- bis 7-gliedrige gesättigte Heterocyclen mit wenigstens einem Stickstoffatom im Ring, die ein oder zwei weitere, unter Stickstoff und Sauerstoff ausgewählte Heteroatome im Ring enthalten können;
(iv) Sterisch gehinderte Amine, z. B. Amine der Formel III: 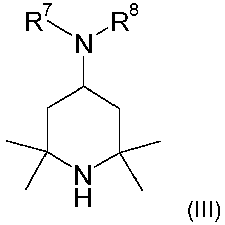 worin R⁷ und R⁸ unabhängig voneinander unter Wasserstoff, C₁₋₆-Alkyl, Amino-C₂₋₆-alkyl, C₁₋₄-Alkylamino-C₂₋₆-alkyl, und Di(C₁₋₄-alkyl)amino-C₂₋₆-alkyl ausgewählt sind, und
(v) Gemische davon.

Spezifische Beispiele sind:
(i) 2-Aminoethanol (Monoethanolamin), 2-(Methylamino)ethanol, 2-(Ethylamino)-ethanol, 2-(n-Butylamino)ethanol, 2-Amino-2-methylpropanol, N-(2-Aminoethyl)-piperazin, Methyldiethanolamin, Ethyldiethanolamin, Diemthylaminopropanol, t-Butylaminoethoxyethanol, 2-Aminomethylpropanol;
(ii) 3-Methylaminopropylamin, Ethylendiamin, Diethylentriamin, Triethylentetramin, 2,2-Dimethyl-1,3-diaminopropan, Hexamethylendiamin, 1,4-Diaminobutan, 3,3-Iminobispropylamin, Tris(2-aminoethyl)amin, Bis(3-dimethylamino-propyl)amin, Tetramethylhexamethylendiamin;
(iii) Piperazin, 2-Methylpiperazin, N-Methylpiperazin, 1-Hydroxyethyl-piperazin, 1,4-Bis-hydroxyethyl-piperazin, 4-Hydroxyethyl-piperidin, Homopiperazin, Piperidin, 2-Hydroxyethylpiperidin und Morpholin;
(iv) 4-Methylamino-2,2,6,6-tetramethyl-piperidin, 4-(n-Propylamino)-2,2,6,6-tetramethylpiperidin, 4-(n-Butylamino)-2,2,6,6-tetramethylpiperidin, 4-(2-Ethylamino-ethyl-amino)-2,2,6,6-tetramethylpiperidin, 4-(3-Dimethylamino-propylamino)-2,2,6,6-tetramethylpiperidin, und
(v) Gemische davon.

In einer bevorzugten Ausführungsform umfasst das Absorptionsmittel mindestens eines der Amine Monoethanolamin (MEA), Methylaminopropylamin (MAPA), Piperazin, Diethanolamin (DEA), Triethanolamin (TEA), Diethylethanolamin (DEEA), Diisopropylamin (DIPA), Aminoethoxyethanol (AEE), Dimethylaminopropanol (DIMAP) und Methyldiethanolamin (MDEA) oder Gemische davon.

In einer besonders bevorzugten Ausführungsform umfasst das Absorptionsmittel eine Kombination des sekundären Amins Piperazin und des tertiären Amins Methyldiethanolamin (MDEA).

Im Allgemeinen umfasst das Absorptionsmittel 10 bis 60 Gew.-% Amin, bevorzugt 35 bis 60 Gew.-%, besonders bevorzugt 50 Gew.-%. Im Allgemeinen liegt der Anteil an primärem oder sekundärem Amin bei 3 bis 10 Gew.-%, bevorzugt 5 bis 8 Gew.-%, wobei die verbleibende Aminmenge durch das tertiäre Amin und die noch verbleibende Gesamtmenge des Absorptionsmittels durch Wasser vervollständigt wird.

Das Absorptionsmittel kann auch Additive, wie Korrosionsinhibitoren, Enzyme, etc. enthalten. Im Allgemeinen liegt die Menge an derartigen Additiven im Bereich von etwa 0,01 bis 3 Gew.-% des Absorptionsmittels.

Das erfindungsgemäße Verfahren ist geeignet zur Behandlung von Fluidströmen, insbesondere Gasströmen aller Art, die CO₂ und optional weitere Sauergase wie H₂S enthalten.

Fluidströme, welche CO₂ und optional H₂S enthalten, sind einerseits Gase, wie Erdgas, Synthesegas, Koksofengas, Spaltgas, Kohlevergasungsgas, Kreisgas, Deponiegase und Verbrennungsgase, und andererseits mit dem Absorptionsmittel im Wesentlichen nicht mischbare Flüssigkeiten, wie LPG (Liquefied Petroleum Gas) oder NGL (Natural Gas Liquids).

In bevorzugten Ausführungsformen ist der Fluidstrom ein Wasserstoff enthaltender Fluidstrom; hierzu zählen Synthesegase, die z. B. durch Kohlevergasung oder Steamreforming herstellbar sind und gegebenenfalls einer Wassergas-Shift-Reaktion unterzogen sind; die Synthesegase werden z. B. zur Herstellung von Ammoniak, Methanol, Formaldehyd, Essigsäure, Harnstoff, zur Fischer-Tropsch-Synthese oder zur Energiegewinnung in einem Integrated Gasification Combined Cycle (IGCC) Prozess verwendet. Typische geshiftete Synthesegase, die erfindungsgemäß behandelt werden können, enthalten etwa 15 bis 35 Vol.-% CO₂, etwa 35 bis 70 Vol.-% H₂, etwa 10 bis 30 Vol.-% N₂ und bis zu etwa 5 Vol.-% andere Gase wie CO und CH₄.

Die Erfindung wird durch die beigefügten Zeichnungen und das nachfolgende Beispiel näher veranschaulicht.

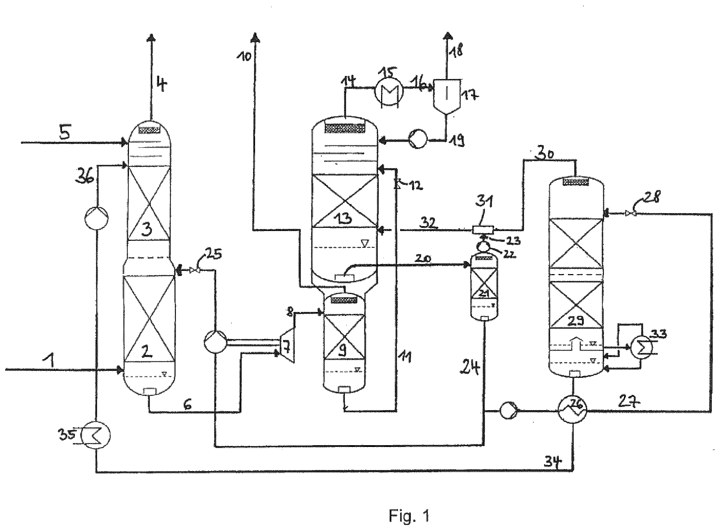

Gemäß Figur 1 wird ein CO₂ enthaltender Fluidstrom, z. B. geshiftetes Synthesegas, über Leitung 1 in den unteren Bereich der ersten Absorptionszone 2 geleitet. Gleichzeitig wird über Leitung 24 ein teilregeneriertes Absorptionsmittel in den oberen Bereich der ersten Absorptionszone 2 gegeben. Nach Verlassen der ersten Absorptionszone 2 durchströmt der behandelte Fluidstrom zur Feinreinigung die zweite Absorptionszone 3. Über Leitung 36 wird regeneriertes Absorptionsmittel in den oberen Bereich der zweiten Absorptionszone 3 gegeben, nachdem das über Leitung 34 herangeführte Absorptionsmittel im Wärmetauscher 35 auf eine geeignete Temperatur abgekühlt worden ist. Der von CO₂ gereinigte Fluidstrom verlässt die zweite Absorptionszone 3 über Leitung 4. Oberhalb der zweiten Absorptionszone 3 wird außerdem kontinuierlich Frischwasser (Make up-Wasser) über Leitung 5 in die zugeführt. Zweckmäßig reicht die Menge an Wasser aus, um die Wasserverluste des Systems auszugleichen. Am Sumpf der ersten Absorptionszone 2 wird das beladene Absorptionsmittel abgezogen und über Leitung 6, eine Turbine 7, Leitung 8 in den HP-Flash 9 entspannt. Über Leitung 10 wird ein Co-Absorbat enthaltender Gasstrom abgezogen. Das von Co-Absorbat weitgehend befreite, beladene Absorptionsmittel wird am Sumpf des HP-Flashs 9 abgezogen und über Leitung 11 in den oberen Bereich des ersten Entspannungsbehälters 13 entspannt. Am Kopf des ersten Entspannungsbehälters 13 wird ein erster CO₂-haltiger Gasstrom über Leitung 14 abgezogen: Aus dem Gasstrom werden mitgeführte Absorptionsmittelbestandteile und Wasser im Wärmetauscher 15 auskondensiert; die Phasen werden im Abscheidegefäß 17 getrennt und das Kondensat über Leitung 19 zurück in den ersten Entspannungsbehälters 13 gepumpt; der getrocknete, erste CO₂-haltige Gasstrom verlässt die Anlage über Leitung 18. Am Sumpf des ersten Entspannungsbehälters 13 wird sub-teilregeneriertes Absorptionsmittel abgezogen und über Leitung 20 in den zweiten Entspannungsbehälter 21 geleitet und entspannt. Das im Sumpf des zweiten Entspannungsbehälters anfallende teilregenerierte Absorptionsmittel 21 wird teilweise über Leitung 24 zur ersten Absorptionszone 2 gepumpt. Ein weiterer Teilstrom passiert den Wärmetauscher 26 und wird über Leitung 27 in den Stripper 29 gepumpt. Die Pumpe erhöht den Druck des teilregenerierten Absorptionsmittels vor dem Eintritt in den Stripper 29. Im Stripper 29 wird ein Teil des Absorptionsmittels am Sumpf durch den Aufheizer 33 verdampft, was die thermische Regenerierung des teilregenerierten Absorptionsmittels im Stripper 29 ermöglicht. Das am Sumpf des Strippers 29 erhaltene regenerierte Absorptionsmittel passiert den Wärmetauscher 26 und gibt dabei einen Teil der Wärme durch indirekten Wärmetausch an das teilregenerierte Absorptionsmittel aus Leitung 27 ab. Anschließend wird das regenerierte Absorptionsmittel über Leitung 34, Wärmetauscher 35 und Leitung 36 zurück in die zweite Absorptionszone 3 gepumpt. Am Kopf des Strippers wird über Leitung 30 ein dritter CO₂-haltiger Gasstrom abgezogen. Dieser Gasstrom dient als Treibdampf für die Strahlpumpe 31. Am Kopf des zweiten Entspannungsbehälters 21 wird der wasserdampfhaltige, zweite CO₂-haltige Gasstrom durch das Gebläse 22 verdichtet und anschließend über Leitung 23 in die Strahlpumpe 31 geleitet. Der verdichtete Brüden wird über Leitung 32 in dem Sumpf des ersten Entspannungsbehälters 13 eingeleitet.

### Beispiel 1

Folgende Abkürzungen werden verwendet:
- T: Temperatur
- p: Druck
- Vₙ: Beladung
- V̇: Volumenstrom (auf Wasser-befreiter Basis)
- ppm: *parts per million*
- H: Höhe
- D: Durchmesser
- V_{pack}: Packungsvolumen
- Nm³: Normkubikmeter (bei *pₙ* = 1,0 bar; *Tₙ* = 273,15 K)

Es wurde die Behandlung eines geshifteten Synthesegases in einer Anlage gemäß Figur 1 simuliert. Für die Simulationsrechnung wurde die BASF-eigene Software Chemasim verwendet (bei Verwendung der kommerziell erhältlichen Software Aspen Plus (Hersteller: AspenTech, Burlington/Massachusetts, USA) werden vergleichbare Ergebnisse erhalten. Das Synthesegas hat folgende Zusammensetzung (auf Wasser-befreiter Basis): CO₂ (17,87 Vol.-%), CO (0,27 Vol.-%), H₂ (59,82 Vol.-%), N₂ (21,51 Vol.-%), CH₄ (0,53 Vol.-%). Das Gas ist wassergesättigt bei 62,8 °C und 28,0 bar.

Das Absorptionsmittel ist: Methyldiethanolamin MDEA (41,9 Gew.-%), Piperazin (8,1 Gew.-%), Wasser (50 Gew.-%).

Es wurden folgende Kenngrößen der Anlage zugrunde gelegt:

| **#** | **Bauteil** | **H [m]** | **D [m]** | **V_{pack} [m³]** |
|---|---|---|---|---|
| 2 | erste Absorptionszone | 5,35 | 4,77 | 95,6 |
| 3 | zweite Absorptionszone | 6,15 | 3,39 | 55,5 |
| 9 | vorgeschalteter Entspannungsbehälter | 2,00 | 4,15 | 27,1 |
| 13 | erster Entspannungsbehälter | 5,00 | 4,78 | 89,8 |
| 21 | zweiter Entspannungsbehälter | 2,00 | 4,74 | 35,3 |
| 29 | Stripper | 10,00 | 3,08 | 74,3 |

Tabelle 1 fasst die wesentlichen Eigenschaften und Zusammensetzungen für die unterschiedlichen Fluid-, Absorptionsmittel- und Gasströme zusammen.

**Tabelle 1**

| **#** | **Bezeichnung des Stroms** | **T [°C]** | **p [bar]** | **Vₙ [Nm³ CO₂/t]*** | **V̇ [m³/h]** | **CO₂ [Mol-%]**** | **V̇ [Nm³/h]** |
|---|---|---|---|---|---|---|---|
| 1 | CO₂ enthaltender Fluidstrom | 62,8 | 28,0 | | | 17,9 | 290529 |
| 36 | regeneriertes Absorptionsmittel nach Kühlung | 50,0 | 27,8 | 2,4 | 430,4 | | |
| 4 | von CO₂ gereinigter Fluidstrom | 50,0 | 27,8 | | | < 100 Molppm | 238026 |
| 5 | Make up-Wasser | 50,0 | 27,8 | | 1,0 | | |
| 6 | beladenes Absorptionsmittel | 87,1 | 28,0 | 49,8 | 2381,4 | | |
| 10 | Co-Absorbat enthaltender Gasstrom | 87,0 | 8,8 | | | 38,8 | 749 |
| 11 | von Co-Absorbat weitgehend befreites, beladenes Absorptionsmittel | 87,0 | 8,8 | | 2379,5 | | |
| 18 | erster CO₂-haltiger Gasstrom | 40,0 | 1,5 | | | 99,7 | 51756 |
| 20 | sub-teilregeneriertes Absorptionsmittel | 82,3 | 1,65 | 38,5 | 2373,3 | | |
| 23 | wasserdampfhaltiger, zweiter CO₂-haltiger Gasstrom | 93,8 | 1,2 | | | 100,0 | 21385 |
| 24 | teilregeneriertes Absorptionsmittel | 77,8 | 1,02 | 33,3 | 2353,9 | | |
| 30 | dritter CO₂-haltiger Gasstrom | 114,1 | 2,5 | | | 100,0 | 14130 |
| 34 | regeneriertes Absorptionsmittel nach regeneriert/teilregeneriert Wärmetausch | 87,8 | 2,6 | 2,4 | 442,5 | | |

| | | | | | | | |
|---|---|---|---|---|---|---|---|
| * Bezogen auf das Absorptionsmittel. ** Wasser-korrigiert. | | | | | | | |

## Patentansprüche

1. Verfahren zum Entfernen von CO₂ aus einem Fluidstrom mit einem wässrigen Absorptionsmittel, bei dem man
a) den Fluidstrom in eine erste Absorptionszone einleitet und mit teilregeneriertem Absorptionsmittel behandelt,
b) den behandelten Fluidstrom in einer zweiten Absorptionszone mit regeneriertem Absorptionsmittel behandelt, wobei man einen von CO₂ gereinigten Fluidstrom sowie ein beladenes Absorptionsmittel erhält,
c) das beladene Absorptionsmittel in einem ersten Entspannungsbehälter auf einen Druck von 1,2 bis 3 bar absolut entspannt, wobei man ein sub-teilregeneriertes Absorptionsmittel und einen ersten CO₂-haltigen Gasstrom erhält,
d) das sub-teilregenerierte Absorptionsmittel in einem zweiten Entspannungsbehälter auf einen Druck von 1 bis 1,2 bar absolut entspannt, wobei man ein teilregeneriertes Absorptionsmittel und einen wasserdampfhaltigen, zweiten CO₂-haltigen Gasstrom erhält,
e) einen Teilstrom des teilregenerierten Absorptionsmittels in die erste Absorptionszone leitet und einen weiteren Teilstrom des teilregenerierten Absorptionsmittels in einen Stripper leitet, in dem man das teilregenerierte Absorptionsmittel thermisch regeneriert, wobei man regeneriertes Absorptionsmittel und einen dritten CO₂-haltigen Gasstrom erhält und wobei der Stripper bei einem Druck betrieben wird, der mindestens 0,9 bar höher ist als der Druck im ersten Entspannungsbehälter,
f) das regenerierte Absorptionsmittel in die zweite Absorptionszone rückführt,
g) den wasserdampfhaltigen, zweiten CO₂-haltigen Gasstrom mit einer Strahlpumpe komprimiert und in direkten Wärmetauschkontakt mit dem beladenen Absorptionsmittel im ersten Entspannungsbehälter bringt, wobei die Strahlpumpe mittels des dritten CO₂-haltigen Gasstroms betrieben wird.

2. Verfahren nach Anspruch 1, **dadurch gekennzeichnet, dass** der Druck des wasserdampfhaltigen, zweiten CO₂-haltigen Gasstroms vor dem Eintritt in die Strahlpumpe mit einem Gebläse erhöht wird.

3. Verfahren nach Anspruch 1 oder 2, **dadurch gekennzeichnet, dass** der Teilstrom des teilregenerierten Absorptionsmittels, der in den Stripper geleitet wird, durch indirekten Wärmeaustausch mit dem regenerierten Absorptionsmittel vorgewärmt wird.

4. Verfahren nach einem der vorhergehenden Ansprüche, **dadurch gekennzeichnet, dass** man das beladene Absorptionsmittel vor dessen Entspannung im ersten Entspannungsbehälter auf einen Druck im Bereich von 6 bis 10 bar absolut entspannt, wobei man einen Co-Absorbat-haltigen Gasstrom und ein von Co-Absorbat befreites, beladenes Absorptionsmittel erhält, das in den ersten Entspannungsbehälter geführt wird.

5. Verfahren nach einem der vorhergehenden Ansprüche, **dadurch gekennzeichnet, dass** man aus dem ersten CO₂-haltigen Gasstrom Absorptionsmittelbestandteile auskondensiert und das Kondensat in den ersten Entspannungsbehälter zurückführt.

6. Verfahren nach Anspruch 5, **dadurch gekennzeichnet, dass** man das Kondensat über eine Rückwaschzone in den ersten Entspannungsbehälter zurückführt.

7. Verfahren nach einem der vorhergehenden Ansprüche, **dadurch gekennzeichnet, dass** man den von CO₂ gereinigten Fluidstrom durch eine Rückwaschzone führt, in der man den von CO₂ gereinigten Fluidstrom mit einer wässrigen Flüssigkeit behandelt.

8. Verfahren nach Anspruch 7, wobei die wässrige Flüssigkeit Wasser aus einer externen Quelle zum Ausgleich von Wasserverlusten ist.

9. Verfahren nach einem der vorhergehenden Ansprüche, **dadurch gekennzeichnet, dass** das wässrige Absorptionsmittel eine wässrige Lösung eines Amins ist.

10. Verfahren nach einem der vorhergehenden Ansprüche, wobei der Fluidstrom ein Synthesegas oder geshiftetes Synthesegas ist.

11. Anlage zum Entfernen von CO₂ aus einem Fluidstrom mit einem wässrigen Absorptionsmittel, umfassend
a) eine erste Absorptionszone zur Behandlung des Fluidstroms mit teilregeneriertem Absorptionsmittel,
b) eine zweite Absorptionszone zur Behandlung des behandelten Fluidstroms mit regeneriertem Absorptionsmittel, wobei man einen von CO₂ gereinigten Fluidstrom sowie ein beladenes Absorptionsmittel erhält,
c) einen ersten Entspannungsbehälter zur Entspannung des beladenen Absorptionsmittels auf einen Druck von 1,2 bis 3 bar absolut, wobei man ein sub-teilregeneriertes Absorptionsmittel und einen ersten CO₂-haltigen Gasstrom erhält,
d) einen zweiten Entspannungsbehälter zur Entspannung des subteilregenerierten Absorptionsmittels auf einen Druck von 1 bis 1,2 bar absolut, wobei man ein teilregeneriertes Absorptionsmittel und einen wasserdampfhaltigen, zweiten CO₂-haltigen Gasstrom erhält,
e) einen Stripper zur thermischen Regenerierung des teilregenerierten Absorptionsmittels, wobei man regeneriertes Absorptionsmittel und einen dritten CO₂-haltigen Gasstrom erhält, wobei der Stripper bei einem Druck betreibbar ist, der mindestens 0,9 bar höher ist als der Druck im ersten Entspannungsbehälter,
eine Leitung zum Leiten eines Teilstroms des teilregenerierten Absorptionsmittels in die erste Absorptionszone und eine Leitung zum Leiten eines weiteren Teilstroms des teilregenerierten Absorptionsmittels in den Stripper;
f) eine Leitung zum Rückführen des regenerierten Absorptionsmittel in die zweite Absorptionszone,
g) eine Strahlpumpe zum Komprimieren und in direkten Wärmetauschkontakt mit dem beladenen Absorptionsmittel im ersten Entspannungsbehälter bringen des wasserdampfhaltigen, zweiten CO₂-haltigen Gasstroms, wobei die Strahlpumpe mittels des dritten CO₂-haltigen Gasstroms betrieben wird.

## Claims

1. A process for removing CO₂ from a fluid stream by means of an aqueous absorption medium, in which
a) the fluid stream is introduced into a first absorption zone and treated with partially regenerated absorption medium,
b) the treated fluid stream is treated with regenerated absorption medium in a second absorption zone, giving a fluid stream which has been freed of CO₂ and a loaded absorption medium,
c) the reloaded absorption medium is depressurized in a first flash vessel to a pressure of from 1.2 to 3 bar absolute, giving a sub-partially regenerated absorption medium and a first CO₂-comprising gas stream,
d) the sub-partially regenerated absorption medium is depressurized in a second flash vessel to a pressure of from 1 to 1.2 bar absolute, giving a partially regenerated absorption medium and a water vapor-comprising, second CO₂-comprising gas stream,
e) a substream of the partially regenerated absorption medium is fed into the first absorption zone and a further substream of the partially regenerated absorption medium is fed into a stripper in which the partially regenerated absorption medium is thermally regenerated, with a regenerated absorption medium and a third CO₂-comprising gas stream being obtained and the stripper being operated at a pressure which is at least 0.9 bar higher than the pressure in the first flash vessel,
f) the regenerated absorption medium is recirculated to the second absorption zone,
g) the water vapor-comprising, second CO₂-comprising gas stream is compressed by means of a jet pump and brought into direct heat exchange contact with the loaded absorption medium in the first flash vessel, with the jet pump being operated by means of the third CO₂-comprising gas stream.

2. The process according to claim 1, wherein the pressure of the water vapor-comprising, second CO₂-comprising gas stream is increased by means of a blower before entering into the jet pump.

3. The process according to claim 1 or 2, wherein the substream of the partially regenerated absorption medium which is fed into the stripper is preheated by indirect heat exchange with the regenerated absorption medium.

4. The process according to any of the preceding claims, wherein the loaded absorption medium is depressurized to a pressure in the range from 6 to 10 bar absolute before depressurization thereof in the first flash vessel, giving a coabsorbate-comprising gas stream and a loaded absorption medium which has been freed of coabsorbate and is fed into the first flash vessel.

5. The process according to any of the preceding claims, wherein the absorption medium constituents are condensed out from the first CO₂-comprising gas stream and the condensate is recirculated into the first flash vessel.

6. The process according to claim 5, wherein the condensate is recirculated via a backscrubbing zone into the first flash vessel.

7. The process according to any of the preceding claims, wherein the fluid stream which has been freed of CO₂ is conveyed through a backwashing zone in which the fluid stream which has been freed of CO₂ is treated with an aqueous liquid.

8. The process according to claim 7, wherein the aqueous liquid is water from an external source to make up for water losses.

9. The process according to any of the preceding claims, wherein the aqueous absorption medium is an aqueous solution of an amine.

10. The process according to any of the preceding claims, wherein the fluid stream is a synthesis gas or shifted synthesis gas.

11. A plant for removing CO₂ from a fluid stream by means of an aqueous absorption medium, comprising
a) a first absorption zone for treating the fluid stream with partially regenerated absorption medium,
b) a second absorption zone for treating the treated fluid stream with regenerated absorption medium, giving a fluid stream which has been freed of CO₂ and a loaded absorption medium,
c) a first flash vessel for depressurizing the loaded absorption medium to a pressure of from 1.2 to 3 bar absolute, giving a sub-partially regenerated absorption medium and a first CO₂-comprising gas stream,
d) a second flash vessel for depressurizing the sub-partially regenerated absorption medium to a pressure of from 1 to 1.2 bar absolute, giving a partially regenerated absorption medium and a water vapor-comprising, second CO₂-comprising gas stream,
e) a stripper for thermally regenerating the partially regenerated absorption medium, with regenerated absorption medium and a third CO₂-comprising gas stream being obtained and the stripper being able to be operated at a pressure which is at least 0.9 bar higher than the pressure in the first flash vessel,
a conduit for feeding a substream of the partially regenerated absorption medium into the first absorption zone and a conduit for feeding a further substream of the partially regenerated absorption medium into the stripper;
f) a conduit for recirculating the regenerated absorption medium to the second absorption zone,
g) a jet pump for compressing the water vapor-comprising, second CO₂-comprising gas stream and bringing it into direct heat exchange contact with the loaded absorption medium in the first flash vessel, with the jet pump being able to be operated by means of the third CO₂-comprising gas stream.

## Revendications

1. Procédé d'élimination de CO₂ à partir d'un courant fluide avec un agent d'absorption aqueux, selon lequel
a) le courant fluide est conduit dans une première zone d'absorption et traité avec un agent d'absorption partiellement régénéré,
b) le courant fluide traité est traité dans une deuxième zone d'absorption avec un agent absorption régénéré, un courant fluide débarrassé du CO₂ et un agent d'absorption chargé étant obtenus,
c) l'agent d'absorption chargé est détendu dans un premier contenant de détente à une pression de 1,2 à 3 bar absolu, un agent d'absorption sous-partiellement régénéré et un premier courant gazeux contenant du CO₂ étant obtenus,
d) l'agent d'absorption sous-partiellement régénéré est détendu dans un deuxième contenant de détente à une pression de 1 à 1,2 bar absolu, un agent d'absorption partiellement régénéré et un deuxième courant gazeux contenant du CO₂, contenant de la vapeur d'eau, étant obtenus,
e) un courant partiel de l'agent d'absorption partiellement régénéré est conduit dans la première zone d'absorption et un courant partiel supplémentaire de l'agent d'absorption partiellement régénéré est conduit dans un extracteur, dans lequel l'agent d'absorption partiellement régénéré est régénéré thermiquement, un agent d'absorption régénéré et un troisième courant gazeux contenant du CO₂ étant obtenus, et l'extracteur étant exploité à une pression qui est au moins 0,9 bar plus élevée que la pression dans le premier contenant de détente,
f) l'agent d'absorption régénéré est recyclé dans la deuxième zone d'absorption,
g) le deuxième courant gazeux contenant du CO₂, contenant de la vapeur d'eau, est comprimé avec une pompe à jet et mis en contact d'échange de chaleur direct avec l'agent d'absorption chargé dans le premier contenant de détente, la pompe à jet étant exploitée au moyen du troisième courant gazeux contenant du CO₂.

2. Procédé selon la revendication 1, **caractérisé en ce que** la pression du deuxième courant gazeux contenant du CO₂, contenant de la vapeur d'eau, est augmentée avant l'entrée dans la pompe à jet avec un ventilateur.

3. Procédé selon la revendication 1 ou 2, **caractérisé en ce que** le courant partiel de l'agent d'absorption partiellement régénéré, qui est conduit dans l'extracteur, est préchauffé par échange de chaleur indirect avec l'agent d'absorption régénéré.

4. Procédé selon l'une quelconque des revendications précédentes, **caractérisé en ce que** l'agent d'absorption chargé est détendu avant sa détente dans le premier contenant de détente à une pression dans la plage allant de 6 à 10 bar absolu, un courant gazeux contenant un co-absorbat et un agent d'absorption chargé débarrassé du co-absorbat étant obtenus, ce dernier étant conduit dans le premier contenant de détente.

5. Procédé selon l'une quelconque des revendications précédentes, **caractérisé en ce que** des constituants de l'agent d'absorption sont condensés à partir du premier courant gazeux contenant du CO₂ et le condensat est recyclé dans le premier contenant de détente.

6. Procédé selon la revendication 5, **caractérisé en ce que** le condensat est recyclé dans le premier contenant de détente par l'intermédiaire d'une zone de lavage en retour.

7. Procédé selon l'une quelconque des revendications précédentes, **caractérisé en ce que** le courant fluide débarrassé du CO₂ est conduit au travers d'une zone de lavage en retour, dans laquelle le courant fluide débarrassé du CO₂ est traité avec un liquide aqueux.

8. Procédé selon la revendication 7, dans lequel le liquide aqueux est de l'eau issue d'une source externe pour la compensation des pertes d'eau.

9. Procédé selon l'une quelconque des revendications précédentes, **caractérisé en ce que** l'agent d'absorption aqueux est une solution aqueuse d'une amine.

10. Procédé selon l'une quelconque des revendications précédentes, **caractérisé en ce que** le courant fluide est un gaz de synthèse ou un gaz de synthèse converti.

11. Unité pour l'élimination de CO₂ à partir d'un courant fluide avec un agent d'absorption aqueux, comprenant :
a) une première zone d'absorption pour le traitement du courant fluide avec un agent d'absorption partiellement régénéré,
b) une deuxième zone d'absorption pour le traitement du courant fluide traité avec un agent d'absorption régénéré, un courant fluide débarrassé du CO₂ et un agent d'absorption chargé étant obtenus,
c) un premier contenant de détente pour la détente de l'agent d'absorption chargé à une pression de 1,2 à 3 bar absolu, un agent d'absorption sous-partiellement régénéré et un premier courant gazeux contenant du CO₂ étant obtenus,
d) un deuxième contenant de détente pour la détente de l'agent d'absorption sous-partiellement régénéré à une pression de 1 à 1,2 bar absolu, un agent d'absorption partiellement régénéré et un deuxième courant gazeux contenant du CO₂, contenant de la vapeur d'eau, étant obtenus,
e) un extracteur pour la régénération thermique de l'agent d'absorption partiellement régénéré, un agent d'absorption régénéré et un troisième courant gazeux contenant du CO₂ étant obtenus, l'extracteur étant exploité à une pression qui est au moins 0,9 bar plus élevée que la pression dans le premier contenant de détente,
une conduite pour la conduite d'un courant partiel de l'agent d'absorption partiellement régénéré dans la première zone d'absorption et une conduite pour la conduite d'un courant partiel supplémentaire de l'agent d'absorption partiellement régénéré dans l'extracteur ;
f) une conduite pour le recyclage de l'agent d'absorption régénéré dans la deuxième zone d'absorption,
g) une pompe à jet pour la compression et la mise en contact d'échange de chaleur direct avec l'agent d'absorption chargé dans le premier contenant de détente du deuxième courant gazeux contenant du CO₂, contenant de la vapeur d'eau, la pompe à jet étant exploitée au moyen du troisième courant gazeux contenant du CO₂.
